# EUROPÄISCHE PATENTSCHRIFT

(11) **EP 4 292 835 B1**
(45) Veröffentlichungstag und Bekanntmachung des Hinweises auf die Patenterteilung: **21.01.2026**
(21) Anmeldenummer: 23170991.6
(22) Anmeldetag: 02.05.2023
(51) Int. Cl.: B60C 11/12, B60C 1/00, B60C 11/00

(54) **FAHRZEUGREIFEN MIT GERICHTETER STEIFIGKEIT**
VEHICLE TYRE WITH DIRECTIONAL STIFFNESS
PNEU DE VÉHICULE À RIGIDITÉ DIRECTIONNELLE

(30) Priorität: 17.06.2022 DE 102022206088
(43) Veröffentlichungstag der Anmeldung: 20.12.2023
(73) Patentinhaber: Continental Reifen Deutschland GmbH, 30175 Hannover (DE)
(72) Erfinder: Römer, Justus, 30165 Hannover (DE); Buschmeier, Jörg, 30165 Hannover (DE); Milchers, Wolfgang, 30165 Hannover (DE)
(74) Vertreter: Continental Corporation

(56) Entgegenhaltungen:
- EP-A1- 1 870 259
- DE-T2- 69 202 478
- JP-A- 2006 168 564
- US-A- 4 836 257
- US-A- 4 986 325
- US-A- 5 643 374
- US-A- 5 679 186
- US-A1- 2018 043 736

## Beschreibung

Die Erfindung betrifft einen Fahrzeugreifen mit einem für den Fahrbahnkotakt vorgesehenen Laufstreifen, der ein anisotropes Steifigkeitsprofil aufweist.

An die Eigenschaften und Leistungscharakteristika moderner Fahrzeugreifen werden stetig steigende Anforderungen gestellt, insbesondere beim Einsatz in Hochleistungsbereichen, wobei ein Bedürfnis danach besteht, die Roll- und Fahreigenschaften zu optimieren. Einen wesentlichen Beitrag zu der Einstellung der Fahreigenschaften liefert bei modernen Fahrzeugreifen der Laufstreifen. Der Laufstreifen ist der Teil des Fahrzeugreifens, der mit der Straße in Kontakt steht und dessen Eigenschaften maßgeblich mitbestimmend für das Verhalten des Fahrzeugreifens sind.

Aus dem Stand der Technik ist es bekannt, zur Optimierung der Fahreigenschaften im Laufstreifen gezielt Anisotropien und Gradienten der physikalisch-chemischen Materialeigenschaften zu erzeugen, beispielsweise bezüglich der Steifigkeit oder des für den Rollwiderstand relevanten Hystereseverhaltens der eingesetzten Gummiwerkstoffe. Im Stand der Technik werden diese ungleichmäßigen Materialeigenschaften in vielen Fällen über den Einsatz von verschiedenen Gummiwerkstoffen erzielt, wie es beispielsweise von sogenannten MCT-Laufstreifen ("Multi Compound Tread") bekannt ist, d.h. durch den bewussten Einsatz chemisch unterschiedlicher Gummiwerkstoffe. Im Stand der Technik wird die Anisotropie der Materialeigenschaften dabei aus fertigungstechnischen Gründen zumeist quer zur Umfangsrichtung erzeugt, beispielsweise durch Co-Extrusion von zwei oder mehr unterschiedlichen Kautschukmaterialien bei der Herstellung eines Laufstreifens.

Im Bereich der Fertigung von Fahrzeugreifen besteht ein fortgesetztes Interesse daran, die Laufeigenschaften von Fahrzeugreifen zu optimieren, wobei es aus fertigungstechnischer Sicht wünschenswert ist, nicht auf den Einsatz unterschiedlicher Gummiwerkstoffe angewiesen sein zu müssen, insbesondere auch um eine höhere Flexibilität bei der Konzeption von Fahrzeugreifen zu ermöglichen. Insbesondere besteht ein Bedürfnis nach konstruktiven Maßnahmen, um die Anfälligkeit von Fahrzeugreifen für unregelmäßige Abnutzung oder das Auftreten von anderen Defekten, wie Sägezahndefekten oder Blockabsenkungen, zu verringern, insbesondere auch auf den nicht angetriebenen Achsen des Fahrzeugs, da viele der aus dem Stand der Technik bekannten MCT-Konzepte in dieser Hinsicht als wenig vorteilhaft empfunden werden.

Die US 5643374 A bezieht sich auf einen Luftreifen, der in der Lage ist, komplizierte Bewegungen des Reifens oder das sogenannte Wanderphänomen zu kontrollieren, das vom Fahrer nicht vorhergesehen werden kann.

Die US 2018043736 A1 offenbart einen Fahrzeugluftreifen, der eine geringere Geräuschemission und einen gleichmäßigeren Verschleiß im Fahrbetrieb aufweist.

Die JP 2006168564 A offenbart einen Luftreifen mit guter Manövrierfähigkeit und geringem Rollwiderstand.

Die EP 1870259 A1 betrifft einen aus einer Kautschukmischung bestehenden Laufstreifen für einen Fahrzeugreifen und einen Fahrzeugreifen, der diesen Laufstreifen enthält, wobei der Laufstreifen durch Längs- und/oder Querrillen in Profilblöcke und/oder Profilbänder untergliedert ist, wobei der Laufstreifen Einkerbungen aufweist, die mit einem solchen Material verfüllt und fest geschlossen sind, das von der Laufstreifenkautschukmischung unterschiedliche Eigenschaften aufweist.

Die US 5679186 A bezieht sich auf einen Luftreifen, dessen Widerstandsfähigkeit gegen Profilverschleiß verbessert ist, insbesondere gegen den Fersen- und Zehenverschleiß, der beim Fahren des Reifens verursacht wird.

Die DE 69202478 T2 offenbart einen Laufstreifen mit mindestens drei Umfangsrippen, die über Umfangsrillen miteinander verbunden sind, wobei jede Rippe eine Mehrzahl von sich in Querrichtung erstreckenden Querrillen aufweist, die eine Vielzahl von innerhalb jeder Rippe hintereinanderliegenden Profilblöcken vorgeben.

Die US 4986325 A offenbart Luftreifen mit verbesserter Nassleistung.

Die US 4836257 A betrifft einen radialen Luftreifen, der für den Einsatz in Schwerlastfahrzeugen wie Lastkraftwagen, Bussen usw. geeignet ist.

Die primäre Aufgabe der vorliegenden Erfindung war es somit, die Nachteile des Standes der Technik auszuräumen oder zumindest zu verringern.

Insbesondere war es die Aufgabe der vorliegenden Erfindung, einen Fahrzeugreifen anzugeben, welcher vorteilhafte Abriebraten aufweist, insbesondere auf der angetriebenen Achse. Zudem war es eine Aufgabe der vorliegenden Erfindung, dass die anzugebenden Fahrzeugreifen weniger anfällig für eine ungleichmäßige Abnutzung und das Auftreten von Defekten wie Sägezähnen und Blockabsenkungen sein sollten, insbesondere auch auf den nicht angetriebenen Achsen.

Es war eine Aufgabe der vorliegenden Erfindung, dass die anzugebenden Fahrzeugreifen hinsichtlich der einzusetzenden Gummiwerkstoffe eine hohe Flexibilität aufweisen sollten und insbesondere auch ohne den Einsatz weiterer Gummiwerkstoffe ausführbar sein sollten.

Es war eine weitere Aufgabe der vorliegenden Erfindung, dass die anzugebenden Fahrzeugreifen hinsichtlich ihrer Ausgestaltung für bestimmte Reifentypen flexibel auslegbar sein sollten, insbesondere auch als Winter-, Sommer- und Ganzjahresreifen.

Zudem war es eine Aufgabe der vorliegenden Erfindung, dass bei den anzugebenden Fahrzeugreifen durch konstruktive Maßnahmen gezielt ein gewünschtes Abriebsverhalten befördert werden können sollte, welches insbesondere auch die Konzeption von laufrichtungsgebundenen Reifen sowie die Optimierung für den Einsatz auf einer Fahrzeugseite unterstützen sollte.

Insoweit war es eine Aufgabe der vorliegenden Erfindung, dass die anzugebenden Fahrzeugreifen sowohl als Fahrzeugluftreifen als auch als Vollgummireifen umsetzbar sein sollten.

Die Erfinder der vorliegenden Erfindung haben nunmehr erkannt, dass sich die vorstehend beschriebenen Aufgaben überraschenderweise lösen lassen, wenn in dem Laufstreifen eines Fahrzeugreifens eine gerichtete Steifigkeit erzeugt wird, indem die im Laufstreifen angeordneten Strukturelemente, beispielsweise die lamellenförmigen Ausnehmungen, sozusagen verkippt und als geneigte Steifigkeitselemente ausgeführt werden, die sich somit nicht im Wesentlichen radial in das Profil erstrecken, wie es in den Ansprüchen definiert ist.

Die vorstehende Erkenntnis resultierte dabei aus ersten Versuchen an Fahrzeugreifen mit sogenannten "Shovel Sipes", welche aus dem Bereich der für Schnee tauglichen Winterreifen bekannt sind. Bei diesen "Shovel Sipes" handelt es sich um weitgehend entlang der radialen Richtung verlaufende Ausnehmungen in den Profilblöcken von Winterreifen, welche im oberen Teil einen Knick aufweisen und somit teilweise in Umfangsrichtung geneigt sind. Diese "Shovel Sipes" sind Strukturelemente, die vor allem der Optimierung des Schneeverhaltens dienen. Die Erfinder haben jedoch erkannt, dass durch den Einsatz von "Shovel Sipes" auch grundsätzliche Vorteile in der Abriebsrate auf der angetriebenen Achse erzielt werden können. Gleichzeitig wurde jedoch festgestellt, dass beim Einsatz dieser lediglich im Endbereich geneigten "Shovel Sipes" Nachteile im Abnutzungsverhalten auf der nicht angetriebenen Achse (sogenanntes "irregular wear") sowie eine höhere Anfälligkeit für Defekte, wie die Ausbildung von Sägezähnen und Blockabsenkungen, beobachtet werden. Darüber hinaus lässt sich das Konzept der spezifisch geformten "Shovel Sipes" nicht problemlos von Winter- und Ganzjahresreifen auf Sommerreifen übertragen, da die resultierende Reduktion der Steifigkeit für Sommerreifen ungeeignet wäre.

Die Erfinder haben sich somit insbesondere auch die Aufgabe gestellt, ausgehend von den vielversprechenden Vorteilen in der Abriebsrate, welche für "Shovel Sipes" beobachtet wurden, eine konstruktive Ausgestaltung zu erreichen, mit der die Vorteile bei der Abriebrate konserviert, jedoch die Nachteile im "irregular wear" und die Anfälligkeit für sonstige Defekte auf der nicht angetriebenen Achse reduziert werden können, wobei wünschenswerterweise keine nachteiligen Auswirkungen auf die Eignung für Sommerreifen entstehen sollten.

Zudem haben sich die Erfinder die Aufgabe gestellt, dass das regelmäßig nur für laufrichtungsgebundene Fahrzeugreifen eingesetzte Konzept der "Shovel Sipes" dahingehend verbessert werden sollte, dass ein vorteilhaftes Abriebsverhalten auch in nicht laufrichtungsgebundenen Reifen realisiert werden können sollte.

Im Zuge der Entwicklung haben die Erfinder erkannt, dass dies überraschend realisierbar ist, wenn Steifigkeitselemente eingesetzt werden, die -anders als "Shovel Sipes"- nicht mit einem ausgeprägten Knick versehen sind, sondern im Wesentlichen gerade verlaufen, ähnlich wie die "Shovel Sipes", jedoch mit einem mittleren Winkel geneigt sind. Diese weitgehend gerade Ausgestaltung in Kombination mit der Neigung erhöht überraschenderweise die Wirksamkeit der Steifigkeitselemente und führt zu größeren Vorteilen hinsichtlich des Abriebsverhaltens, sowohl auf der angetriebenen als auch der nicht angetriebenen Achse.

Ohne an diese Theorie gebunden sein zu wollen, gehen die Erfinder davon aus, dass durch den eingestellten Winkel bei den weitgehend geraden Steifigkeitselementen die im Einsatz wirkende Radialkraft teilweise in eine Horizontalkomponente umgeleitet wird. Diese Kraftkomponente kann unter optimaler Einstellung des Neigungswinkels gezielt zur Reduzierung der Abriebrate verwendet werden, wobei für die an die "Shovel Sipes" angelehnte Neigung in Umfangsrichtung gefunden wurde, dass die in Umfangsrichtung geneigten Steifigkeitselemente im Laufstreifen weit überwiegend in die gleiche Richtung geneigt sein müssen, um diesen positiven Effekt zu erhalten. Dies ist in vielen Reifen problemlos umzusetzen und nur in Ausnahmefällen ein konstruktiv limitierendes Problem, da es beispielsweise die Umsetzung in Fahrzeugreifen erschwert, in denen das sogenannte RAT ("Residual Aligning Torque") eingestellt werden soll, da in diesen Fahrzeugreifen wohl eine gleichmäßige Verteilung von in die eine oder die andere Umfangsrichtung geneigten Strukturelementen erfolgen müsste, um die gewünschten RAT-Effekte zu erzielen. Es wird angenommen, dass die Einleitung einer entgegen der externen Antriebskraft wirkenden Kraft in den Laufstreifen durch die geneigten Steifigkeitselemente in Längsrichtung die Kraftübertragung vom Auslaufbereich der Aufstandsfläche weg und in Richtung des Einlaufes verlagert, sodass ein flacherer Gradient der Krafteinwirkung erhalten wird, durch den ein sogenannte "snap-out" am Auslauf des Aufstandsbereichs (auch als "latschen" oder "footprint" bezeichnet) verringert wird, was sich positiv auf die Abriebsrate und das Auftreten von sonstigen unerwünschten Abnutzungseffekten auswirkt.

In vorteilhafter Weise sind, anders als die "Shovel Sipes", die geraden Steifigkeitselemente auch für den Einsatz in Sommerreifen geeignet und können, da sie keine Funktion im Bereich des Schneeverhaltens erfüllen müssen, in vorteilhafter Weise sogar in den Laufstreifen hinein verlagert werden, wo sie unterhalb der Profiloberfläche eine vorteilhafte Anisotropie der Steifigkeit erzeugen, die sich in den vorstehend beschriebenen

Vorteilen äußert. Zudem haben die Erfinder gefunden, dass die Loslösung von der Optimierung des Schneeverhaltens es ermöglicht, auch eine Neigung in Querrichtung vorzusehen, wodurch Vorteile beim Abriebsverhalten auch bei nicht laufrichtungsgebundenen Fahrzeugreifen, sowie eine Optimierung der Laufeigenschaften als Fahrzeugseiten gebundener Fahrzeugreifen, erzielt werden können.

In eigenen Versuchen und komplementären Abriebssimulationen wurden mit verschiedenen Neigungswinkeln vorteilhafte Ergebnisse erzielt. Dabei führte eine stärkere Neigung zu einer deutlichen Reduzierung der Abriebsraten im Mittenbereich des Reifens, wobei eine Abriebsreduktion um mehr als 80% erzielt werden konnte. Gleichzeitig wurde jedoch beobachtet, dass sich hierdurch der Abrieb in den Schulterbereichen erhöhen kann, sodass Maßnahmen zur Kompensation entwickelt wurden, wie sie nachfolgend offenbart werden. Ohne weitere Maßnahmen ergibt sich insbesondere bei geringen Neigungswinkeln insgesamt eine vorteilhafte Reduzierung der maximalen Abriebsrate von etwa 33 %, entsprechend einer Reduktion der maximalen Abriebsrate von 3 mm auf 2 mm, also einer Verbesserung der Lebenserwartung um 50 %, ohne das Abriebsverhalten in den Seitenbereichen allzu spürbar zu verschlechtern.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden.

Die Erfindung betrifft einen Fahrzeugreifen mit einem für den Fahrbahnkotakt vorgesehenen Laufstreifen, wobei der Laufstreifen eine Vielzahl von durch Profilrillen voneinander getrennten Profilblöcken umfasst, die jeweils eine für den Fahrbahnkontakt vorgesehene Kontaktoberfläche aufweisen,
wobei der Laufstreifen eine Vielzahl von flächigen Strukturelementen umfasst, wobei jedes Strukturelement in Längsrichtung jeweils eine zentrale Schwerpunktlinie aufweist, die sich bezogen auf die radiale Richtung jeweils von einem inneren Punkt P(r₁) mit dem Radius r₁ zu einem äußeren Punkt P(r₂) mit dem Radius r₂ durch den Laufstreifen erstrecken, und die Punkte P(r) als Funktion des Radius r umfasst,
wobei die Strukturelemente unabhängig voneinander ausgewählt sind aus der Gruppe bestehend aus Ausnehmungen im Laufstreifen, und Materialbereichen mit einer im Vergleich mit dem umliegenden Laufstreifen erhöhten oder verringerten Steifigkeit,
wobei die zentrale Schwerpunktlinie jedes Strukturelements an jedem Punkt P(r) mit der Umfangsrichtung jeweils einen radial nach innen gerichteten Tangentenwinkel α(r) einschließt, wobei die zentrale Schwerpunktlinie jedes Strukturelements an jedem Punkt P(r) mit der axialen Richtung jeweils einen radial nach innen gerichteten Tangentenwinkel β(r) einschließt,
wobei zumindest ein Teil der Strukturelemente als Steifigkeitselemente ausgebildet sind, für die im jeweiligen Bereich von r₁ bis r₂ gilt:
   i) dass diese in Umfangsrichtung geneigte Steifigkeitselemente sind, deren mittlerer Tangentenwinkel <α(r)> weniger als 89° beträgt, wobei die Differenz Δα(r) zwischen dem Maximum und dem Minimum des Tangentenwinkels a(r) kleiner ist als 15°,
      und
   ii) dass diese in Querrichtung geneigte Steifigkeitselemente sind, deren mittlerer Tangentenwinkel <β(r)> weniger als 89° beträgt, wobei die Differenz Δβ(r) zwischen dem Maximum und dem Minimum des Tangentenwinkels β(r) kleiner ist als 15°,
wobei die Steifigkeitselemente bezogen auf die Gesamtzahl der Steifigkeitselemente zu 80 % oder mehr in den Profilblöcken angeordnet sind, wobei bezogen auf die Gesamtzahl der Steifigkeitselemente 50 % oder mehr der Steifigkeitselemente in Umfangsrichtung geneigte Steifigkeitselemente sind,
wobei 60 % oder mehr der in Umfangsrichtung geneigten Steifigkeitselemente einen mittleren Tangentenwinkel <α(r)> aufweisen, in Umfangsrichtung geneigten Steifigkeitselemente einen mittleren Tangentenwinkel <α(r)> aufweisen, der in die gleiche Richtung weist,
wobei der mittlere Tangentenwinkel <α(r)> zwischen separaten Steifigkeitselementen quer zur Umfangsrichtung variiert, wobei der mittlere Tangentenwinkel <α(r)> im Zentralbereich des Laufstreifens ein Minimum aufweist, wobei der Zentralbereich die mittleren 60 % des Laufstreifens quer zur Umfangsrichtung umfasst.

Die Erfindung betrifft eine Fahrzeugreifen, welcher in Übereinstimmung mit dem fachmännischen Verständnis einen Laufstreifen umfasst. Bevorzugt ist dabei ein erfindungsgemäßer Fahrzeugreifen, wobei der Fahrzeugreifen ein Fahrzeugluftreifen ist. Besonders bevorzugt ist dabei ein erfindungsgemäßer Fahrzeugreifen, wobei der Fahrzeugreifen ein LKW- oder PKW-Reifen, bevorzugt ein PKW-Reifen, ist.

Der Laufstreifen umfasst eine Vielzahl von flächigen Strukturelementen, wie es auch aus dem Stand der Technik bekannt ist. Solche Strukturelemente sind insbesondere rillenförmige Ausnehmungen, die sich im Stand der Technik regelmäßig parallel zur radialen Richtung des Fahrzeugreifens in den Fahrzeugreifen hinein erstrecken, und der Einstellung der Profileigenschaften dienen. Solche Strukturelemente erstrecken sich mit Blick auf die radiale Richtung des Fahrzeugreifens somit von einem innen liegenden Punkt beziehungsweise einer innen liegenden Bodenfläche zu einem äußeren Punkt beziehungsweise einer äußeren Außenfläche. Am Beispiel einer aus dem Stand der Technik bekannten rillenförmigen Ausnehmung, die vom Fachmann auch als "Lamelle" bezeichnet wird, bedeutet dies, dass der Grund der Lamelle näher am Mittelpunkt des Fahrzeugreifens liegt als die Öffnung der Lamelle an der Oberfläche des Laufstreifens.

In Übereinstimmung mit dem fachmännischen Verständnis handelt es sich um flächige Strukturelemente, d.h. um Strukturelemente, welche in der durch zwei Raumrichtungen aufgespannten Ebene eine signifikant größere Ausdehnung aufweisen als in der orthogonal dazu stehenden Raumrichtung. Entsprechend handelt es sich bei den Strukturelementen beispielsweise um rillenförmige Ausnehmungen oder dünne Materialschichten, nicht jedoch beispielsweise um kubische Materialblöcke.

Der Fachmann versteht, dass es zur Definition der Neigung der Strukturelemente in einem komplexen System wie einem Fahrzeugreifen, notwendig ist, für die Strukturelemente jeweils ein sinnvolles Bezugssystem anzugeben, über das die Neigung der Strukturelemente präzise angegeben werden kann. Auch wenn die Bestimmung der Neigung bei den in der Praxis vermutlich wohl relevantesten Strukturelementen, nämlich den im Wesentlichen geraden Einschnitten, regelmäßig unproblematisch ist, ist es für bestimmte Anwendungen nach Einschätzung der Erfinder vorteilhaft, auch Strukturelemente mit komplexeren Grundflächen und größeren Volumina geneigt auszuführen.

Um auch dies sinnvoll beschreiben zu können, wird im Rahmen der vorliegenden Erfindung für jedes Strukturelement eine zentrale Schwerpunktlinie als Bezugssystem definiert, die sich in Längsrichtung, d.h. von radial Innen nach radial Außen im Strukturelement erstreckt, wie es auch in den beigefügten Figuren visualisiert ist. Diese Schwerpunktlinie umfasst für einen gegebenen Radius r den Punkt P(r). Die Bestimmung der Schwerpunktlinie stellt für den Fachmann in der Praxis kein Problem dar und kann bei typischen Fahrzeugreifen und Strukturelementen üblicher Größe im Zweifelsfall zuverlässig angenähert werden als die Verbindungslinie der Mittelpunkte M(r) der jeweiligen Schnittflächen der Strukturelemente mit der Umfangsfläche für jeden Radius, so dass die Grundkrümmung des Fahrzeugreifens in Umfangsrichtung berücksichtigt wird. Durch dieses Vorgehen wird auch für komplexere Strukturelemente, beispielsweise wellenförmig verlaufende rillenartige Ausnehmungen ein klar definiertes Bezugssystem geschaffen.

Bei den Strukturelementen kann es sich prinzipiell um alle Arten von flächigen Strukturelementen handeln, die eine Beeinflussung der lokalen Steifigkeit ermöglichen. In der einfachsten Ausgestaltung handelt es sich hierbei um Ausnehmungen im Material, wie sie als parallel zur radialen Richtung verlaufende Einschnitte und rillenartige Vertiefungen aus dem Stand der Technik umfassend bekannt sind. Darüber hinaus ist jedoch auch der Einsatz von Materialbereichen möglich, in denen lokal, d.h. in den Abmessungen des jeweiligen Strukturelements, ein Werkstoff eingesetzt wird, welcher sich hinsichtlich seiner Steifigkeit von den umliegenden Bestandteilen des Laufstreifens unterscheidet. Hierfür kommen naturgemäß insbesondere Gummiwerkstoffe in Betracht, die sich beispielsweise bedingt durch die zur Vulkanisation verwendeten Bedingungen und/oder die chemische Natur des eingesetzten Kautschukmaterials hinsichtlich ihrer Steifigkeit von den umliegenden Gummiwerkstoffen des Laufstreifens unterscheidet.

Die Orientierung der Strukturelemente im Raum kann im Lichte der vorstehenden Definition der zentralen Schwerpunktlinie relativ zu der Umfangsrichtung beziehungsweise der axialen Richtung bestimmt werden, um den Grad der Neigung zu bestimmen.

In dem in der Praxis besonders relevanten Fall von Strukturelementen, welche eine im Wesentlichen gerade verlaufende zentrale Schwerpunktlinie (d.h. eine Schwerpunktlinie mit konstanter Steigung) aufweisen, ist der Winkel zwischen der zentralen Mittellinie und der Umfangsrichtung beziehungsweise der axialen Richtung besonders leicht zu bestimmen.

Im Falle von zentralen Schwerpunktlinie, welche von der Form einer idealen Gerade abweichen, kann für jeden Punkt P(r) mit dem Radius r der Winkel mit der anliegenden Tangente bestimmt werden, wie es der Fachmann aus den Grundbereichen der Analysis bei der Bestimmung von Steigungen kennt. Entsprechend entspricht es dem Verständnis des Fachmannes, dass im Rahmen der vorliegenden Erfindung jeweils von den Tangentenwinkeln gesprochen wird, die im Fall von geraden Mittellinien in den Schnittwinkel der Schwerpunktlinie mit der Umfangsrichtung beziehungsweise der axialen Richtung übergehen.

Der Fachmann versteht, dass eine präzise Beschreibung von Winkelrelationen es erfordert, den als Bezugssystem dienenden Winkel klar zu definieren. Durch den Schnitt der zentralen Schwerpunktlinie mit beispielsweise der Umfangsrichtung werden vier Winkel ausgebildet, nämlich zwei Paare von Scheitel- beziehungsweise Gegenwinkeln gleicher Größe. In Übereinstimmung mit dem üblichen Vorgehen bei Schnittwinkeln wird im Rahmen der vorliegenden Erfindung jeweils der kleinere der Schnittwinkel herangezogen. Um darüber hinaus definieren zu können, in welche Richtung der entsprechende Winkel weist, wird im Rahmen der vorliegenden Erfindung insoweit der Winkel herangezogen, der radial nach innen weist, d.h. auf der zum Reifeninneren weisenden Seite liegt, wie es auch nachfolgend weiter veranschaulicht wird.

Um die Neigung in Umfangsrichtung zu bestimmen, kann der Tangentenwinkel zwischen der zentralen Schwerpunktlinie und der Umfangsrichtung bestimmt werden. Dieser liegt für die aus dem Stand der Technik bekannten geraden, ungeneigten Einschnitte bei 90°. Die Bezugsrichtung für die Bewertung der Neigung in Querrichtung ist die axiale Richtung des Fahrzeugreifens, die orthogonal zur Umfangsrichtung steht. Bei den aus dem Stand der Technik bekannten Strukturelementen ist auch hierbei der Winkel im Wesentlichen 90°.

Der Fachmann versteht, dass es im Bereich der Fahrzeugreifen in den Schulterbereichen des Laufstreifens zu einer Krümmung kommen kann. Strukturelemente, die sich in Schulterbereichen befinden und über aus dem Stand der Technik bekannte Strukturelemente verfügen, welche sich im Wesentlichen orthogonal zur Oberfläche in den Laufstreifen erstrecken, weisen in diesem Schulterbereich zumindest potentiell einen von 90° verschiedenen Winkel mit der Axialrichtung auf, der jedoch durch die inhärente Krümmung der Reifenoberfläche im Schulterbereich verursacht wird. Der Fachmann versteht insoweit, dass die vorstehende Definition, dass der relevante Laufstreifen für den Fahrbahnkontakt vorgesehen ist, bedeutet, dass die Definition für die geneigten Strukturelemente für den Teil des Laufstreifens gelten, der für den Fahrbahnkontakt vorgesehen und infolgedessen im Wesentlichen parallel zur axialen Richtung verläuft und die gewölbten Schulterbereiche im Rahmen der vorliegenden Erfindung entsprechend nicht dem Laufstreifen zugeordnet werden.

Die erfindungsgemäße Neigung der spezifischen Strukturelemente wird im Rahmen der vorliegenden Erfindung nunmehr darüber ausgedrückt, dass der Schnittwinkel der zentralen Schwerpunktlinie mit der Umfangsrichtung beziehungsweise der axialen Richtung von 90° abweicht. Um entsprechende geneigte Strukturelemente sinnvoll von anderen, nicht geneigten Strukturelementen unterscheiden zu können, werden diese spezifischen Strukturelemente hierbei als Steifigkeitselemente bezeichnet, um ihre Funktion zur Erzeugung einer gerichteten Steifigkeit Rechnung zu tragen, wobei zudem zwischen in Umfangsrichtung und in Querrichtung geneigten Steifigkeitselementen unterschieden wird, wobei auch eine Neigung in beide Richtungen möglich ist.

Bei im Wesentlichen geraden Schwerpunktlinien ist der Tangentenwinkel vorteilhafterweise direkt als Schnittwinkel an einem beliebigen Punkt zu bestimmen. Um jedoch auch die Definition für solche Schwerpunktlinien zu ermöglichen, welche zumindest abschnittsweise von einem geraden Verlauf abweichen, wird die Neigung im Rahmen der vorliegenden Erfindung über den mittleren Tangentenwinkel bestimmt, welcher im Falle von geraden Schwerpunktlinien jeweils in den Schnittwinkel übergeht. Den mittleren Tangentenwinkel bestimmt der Fachmann dabei zwangslos unter Rückgriff auf grundlegende mathematische Konzepte und greift insbesondere auf das Integral der entsprechenden Winkelfunktion zwischen r1 und r2 zurück, welches durch die Differenz zwischen r2 und r1 geteilt wird.

Zudem wird vorstehend für beide Arten von Steifigkeitselementen noch definiert, dass die Differenz zwischen dem maximalen und dem minimalen Tangentenwinkel jeweils kleiner ist als 15°. Dies bedeutet, dass die Steifigkeitselemente mit relativ gleichmäßiger Steigung der Schwerpunktlinie ausgebildet sind und bspw. keine ausgeprägten Knicke umfassen, wie sie beispielsweise bei "Shovel Sipes" auftreten, bei denen die Differenz der extrem Tangentenwinkel regelmäßig in der Größenordnung von 45° oder mehr liegt.

Zudem ist der erfindungsgemäße Fahrzeugreifen hinsichtlich der Ausrichtung der mittleren Tangentenwinkel der in Umfangsrichtung geneigten Steifigkeitselemente dahingehend begrenzt, dass diese, zu 60% oder mehr in die gleiche Richtung weisen müssen. In Übereinstimmung mit dem fachmännischen Verständnis ist damit die Richtung bezeichnet, in die sich der Winkel öffnet, die also vom Schnittpunkt der Mittellinie mit der Umfangsrichtung beziehungsweise der axialen Richtung weg weist.

In den Experimenten der Erfinder wurde dabei nur für eine Vorzugsausrichtung in Umfangsausrichtung und eine daraus resultierende Anisotropie bzw. gerichtete Steifigkeit die gewünschte vorteilhafte Auswirkung auf das Abriebsverhalten beobachtet. Insoweit erachten es die Erfinder als einen Vorteil der in Querrichtung geneigten Steifigkeitselemente, dass sich hierbei gezeigt hat, dass keine Vorzugsrichtung eingestellt werden muss, um einen positiven Effekt zu erzeugen, sodass im Gegenteil sogar Ausgestaltungen bevorzugt sind, in denen die in Querrichtung geneigten Steifigkeitselemente auf den unterschiedlichen Seiten des Fahrzeugreifens bewusst in unterschiedliche Richtungen ausgerichtet werden, und beispielsweise jeweils nach außen weisen, sodass im Wesentlichen 50% in die eine und 50% in die andere Richtung weisen.

Nach Einschätzung der Erfinder werden bereits mit relativ kleinen Abweichungen von rechtwinkligen Tangentenwinkeln und auch bei gewissen Abweichungen von der idealen geraden Form vorteilhafte Auswirkungen auf das Abriebverhalten festgestellt. Gleichzeitig ergibt sich ein besonders vorteilhafter Einfluss auf die Abriebseigenschaften nach Erkenntnis der Erfinder dann, wenn der Tangentenwinkel spürbar von 90° abweicht. Gleichzeitig werden, in Ermangelung von wie nachfolgend beschriebenen Gegenmaßnahmen, bei relativ großen Neigungen, d.h. Abweichungen von 90° zuweilen nachteilige Einflüsse im Abriebsverhalten in den Randbereichen beobachtet, zumindest bei der Neigung in Umfangsrichtung. Entsprechend haben die Erfinder besonders geeignete Winkel identifiziert, wobei es besonders bevorzugt ist, insoweit die gleichen Werte für die in Umfangsrichtung beziehungsweise Querrichtung geneigten Steifigkeitselemente einzustellen beziehungsweise die daraus resultierenden Bereiche aus den nachfolgend aufgeführten Maxima und Minima anzusetzen. Bevorzugt ist deshalb ein erfindungsgemäßer Fahrzeugreifen, wobei für die in Umfangsrichtung geneigten Steifigkeitselemente gilt, dass der mittlere Tangentenwinkel <α(r)> 87° oder weniger, bevorzugt 85° oder weniger, besonders bevorzugt 80° oder weniger, beträgt, wobei der mittlere Tangentenwinkel <α(r)> bevorzugt 45° oder mehr, besonders bevorzugt 60° oder mehr, beträgt. Bevorzugt ist zusätzlich oder alternativ ein erfindungsgemäßer Fahrzeugreifen, wobei für die in Querrichtung geneigten Steifigkeitselemente gilt, dass der mittlere Tangentenwinkel <β(r)> 87° oder weniger, bevorzugt 85° oder weniger, besonders bevorzugt 80° oder weniger, beträgt, wobei der mittlere Tangentenwinkel <β(r)> bevorzugt 45° oder mehr, besonders bevorzugt 60° oder mehr, beträgt.

Auch wenn die erfindungsgemäßen Fahrzeugreifen nach Einschätzung der Erfinder eine gewisse Krümmung der Steifigkeitselemente verkraften können, wie es vorstehend definiert ist, zeigen die Experimente der Erfinder deutlich, dass mit Steifigkeitselementen, welche eine möglichst gerade zentrale Schwerpunktlinie aufweisen, die besten Ergebnisse erzielt werden. Da entsprechende Steifigkeitselemente auch noch deutlich einfacher herzustellen sind, ist der Einsatz entsprechender Steifigkeitselemente für beide Neigungsrichtungen explizit bevorzugt, wobei jeweils ganz besonders bevorzugt ist, dass die zentrale Schwerpunktlinie eine Gerade mit im Wesentlichen konstanter Steigung ist. Bevorzugt ist entsprechend ein erfindungsgemäßer Fahrzeugreifen, wobei für die in Umfangsrichtung geneigten Steifigkeitselemente gilt, dass die Differenz Δα(r) kleiner ist als 10°, bevorzugt kleiner ist als 5°, besonders bevorzugt kleiner ist als 1°. Bevorzugt zusätzlich oder alternativ ist ein erfindungsgemäßer Fahrzeugreifen, wobei für die in Querrichtung geneigten Steifigkeitselemente gilt, dass die Differenz Δβ(r) kleiner ist als 10°, bevorzugt kleiner ist als 5°, besonders bevorzugt kleiner ist als 1°. Auch hierbei werden dabei für die beiden Neigungen bevorzugt die gleichen Obergrenzen definiert.

Wie vorstehend erläutert, können als Strukturelemente neben den aus dem Stand der Technik bekannten Ausnehmungen, die sich auch für die vorliegende Erfindung ausgezeichnet eignen, insbesondere auch Materialbereiche mit veränderten Steifigkeiten eingesetzt werden, wodurch es insbesondere möglich wird, gegebenenfalls auch Bereiche erhöhter Steifigkeit zu erzeugen und die Erzeugung einer gerichteten Steifigkeit möglich ist, ohne Ausnehmungen im Material erzeugen zu müssen, was insbesondere dann bevorzugt ist, wenn die Steifigkeitselemente nicht an der Oberfläche des Laufstreifens, sondern im Inneren angeordnet werden sollen, wie es nachfolgend offenbart ist. Auch wenn es insoweit theoretisch möglich ist, beide Arten von Strukturelementen im gleichen Fahrzeugreifen einzusetzen, ist es nach Einschätzung der Erfinder hinsichtlich der Fertigungseffizienz besonders bevorzugt, jeweils lediglich eine Art der Strukturelemente vorzusehen, wobei für den Einsatz in den Materialbereichen naturgemäß insbesondere Gummiwerkstoffe geeignet sind. Bevorzugt ist folglich zum einen ein erfindungsgemäßer Fahrzeugreifen, wobei die Strukturelemente oder die Steifigkeitselemente unter den Strukturelementen, unabhängig voneinander ausgewählt sind aus der Gruppe bestehend aus Ausnehmungen, insbesondere rillenförmigen Ausnehmungen, im Laufstreifen. Bevorzugt ist entsprechend alternativ ein erfindungsgemäßer Fahrzeugreifen, wobei die Strukturelemente oder die Steifigkeitselemente unter den Strukturelementen unabhängig voneinander ausgewählt sind aus der Gruppe bestehend aus Materialbereichen mit einer im Vergleich mit dem umliegenden Laufstreifen verringerten oder erhöhten, bevorzugt verringerten Steifigkeit. Bevorzugt ist dabei ein erfindungsgemäßer Fahrzeugreifen, wobei die Materialbereiche ein oder mehrere Materialien umfassen, die ausgewählt sind aus der Gruppe bestehend aus Gummiwerkstoffen. Bevorzugt ist dabei zusätzlich oder alternativ ein erfindungsgemäßer Fahrzeugreifen, wobei das Material im Materialbereich einen E-Modul aufweist, der sich um 2 MPa oder mehr, bevorzugt um 3 MPa oder mehr, besonders bevorzugt um 4 MPa oder mehr, von dem E-Modul des umliegenden Laufstreifens unterscheidet.

Im Rahmen der vorliegenden Erfindung bezeichnet der Ausdruck E-Modul den mittleren dynamischen Speichermodul E', welcher für Gummiwerkstoffe aus einer dynamisch-mechanischen Messung bei 55 °C gemäß DIN 53513:1990-03 ermittelt wird, wobei der mittlere dynamische Speichermodul E' der Mittelwert aus zwei Messungen bei 0,15 % Dehnung und 8 % Dehnung ist.

Unabhängig von der Art des Strukturelements ist es bevorzugt, die Steifigkeitselemente mit vergleichsweise geringem Volumen auszuführen, was dadurch erreicht werden kann, dass diese besonders flächig ausgeführt werden, wobei dies insbesondere beim Einsatz von Ausnehmungen sinnvoll ist. Bevorzugt ist folglich ein erfindungsgemäßer Fahrzeugreifen, wobei die Steifigkeitselemente in Richtung ihrer geringsten Ausdehnung eine Breite aufweisen, die 20 % oder weniger, bevorzugt 15 % oder weniger, besonders bevorzugt 10 % oder weniger, ganz besonders bevorzugt 5 % oder weniger, der Länge oder Tiefe in Richtung der größten Ausdehnung, entspricht.

Bevorzugt ist zusätzlich oder alternativ ein erfindungsgemäßer Fahrzeugreifen, wobei die Steifigkeitselemente bezogen auf die Gesamtzahl der Steifigkeitselemente zu 80 % oder mehr, bevorzugt zu 90 % oder mehr, besonders bevorzugt zu 95 % oder mehr, ganz besonders bevorzugt zu im Wesentlichen zu 100 %, die gleiche Grundform aufweisen.

Wie vorstehend erläutert, kann es als Vorteil der Erfindung gesehen werden, dass die gerichtete Steifigkeit auf verschiedene Weisen erzeugt werden kann. Hierbei ist es nicht zwangsläufig notwendig, dass sich die Steifigkeitselemente bis zur Oberfläche des Laufstreifens erstrecken, da die vorteilhafte Beeinflussung der Abriebseigenschaft nach Erkenntnis der Erfinder auch erreicht werden kann, wenn die Steifigkeitselemente im Inneren des Laufstreifens angeordnet werden. Dies lässt sich nach Einschätzung der Erfinder besonders gut bei Fahrzeugluftreifen realisieren, deren Laufstreifen auf eine sogenannte "Cap/Base"-Konstruktion zurückgreift, wobei hier eine Anordnung der Steifigkeitselemente in der Decklage beziehungsweise in der unterliegenden Basislage sowie auch eine teilweise Anordnung in beiden Lagen denkbar ist. Insoweit besteht nach Einschätzung der Erfinder eine gewisse Präferenz dafür, Steifigkeitselemente in der Decklage als Ausnehmungen auszuführen, während zur Vermeidung von Hohlräumen im Inneren des Fahrzeugreifens die Ausgestaltung mit Materialbereichen für Steifigkeitselemente in der Basislage besonders geeignet ist. Bevorzugt ist ein erfindungsgemäßer Fahrzeugreifen, wobei der Laufstreifen einen mehrschichtigen Aufbau mit einer für den Fahrbahnkotakt vorgesehenen Decklage und einer in radialer Richtung unterhalb der Decklage angeordneten Basislage umfasst. Bevorzugt ist dabei ein erfindungsgemäßer Fahrzeugreifen, wobei die Steifigkeitselemente bezogen auf die Gesamtzahl der Steifigkeitselemente zu 60 % oder mehr, bevorzugt zu 80 % oder mehr, besonders bevorzugt zu 90 % oder mehr, ganz besonders bevorzugt zu 95 % oder mehr, insbesondere bevorzugt im Wesentlichen zu 100 %, zumindest über einen Teil der Länge der Steifigkeitselemente, bevorzugt über den überwiegenden Teil der Länge, besonders bevorzugt im Wesentlichen über die gesamte Länge, in der Decklage angeordnet sind. Bevorzugt ist teilweise zusätzlich bzw. alternativ ein erfindungsgemäßer Fahrzeugreifen, wobei die Steifigkeitselemente bezogen auf die Gesamtzahl der Steifigkeitselemente zu 60 % oder mehr, bevorzugt zu 80 % oder mehr, besonders bevorzugt zu 90 % oder mehr, ganz besonders bevorzugt zu 95 % oder mehr, insbesondere bevorzugt im Wesentlichen zu 100 %, zumindest über einen Teil der Länge der Steifigkeitselemente, bevorzugt über den überwiegenden Teil der Länge, besonders bevorzugt im Wesentlichen über die gesamte Länge, in der Basislage angeordnet sind.

Hieran anknüpfend und losgelöst von einer etwaigen "Cap/Base"-Konstruktion des Laufstreifens, lassen sich die zwei vorstehend beschriebenen extremen Ausgestaltungen, d.h. dass die Steifigkeitselemente sich bis zur Oberfläche des Laufstreifens erstrecken oder vollständig im Inneren des Laufstreifens angeordnet sind, alternativ formulieren. Bevorzugt ist in diesem Sinne ein erfindungsgemäßer Fahrzeugreifen, wobei die Steifigkeitselemente bezogen auf die Gesamtzahl der Steifigkeitselemente zu 80 % oder mehr, bevorzugt zu 90 % oder mehr, besonders bevorzugt zu 95 % oder mehr, ganz besonders bevorzugt zu 98 % oder mehr, insbesondere bevorzugt im Wesentlichen zu 100 %, teilweise an der Oberfläche des Laufstreifens liegen. Bevorzugt ist alternativ ein erfindungsgemäßer Fahrzeugreifen, wobei die Steifigkeitselemente bezogen auf die Gesamtzahl der Steifigkeitselemente zu 80 % oder mehr, bevorzugt zu 90 % oder mehr, besonders bevorzugt zu 95 % oder mehr, ganz besonders bevorzugt zu 98 % oder mehr, insbesondere bevorzugt im Wesentlichen zu 100 %, vollständig im Inneren des Laufstreifens angeordnet sind.

In der Praxis sind insbesondere solche Fahrzeugreifen relevant, welche über ein Profil verfügen. Erfindungsgemäß ist entsprechend ein erfindungsgemäßer Fahrzeugreifen, wobei der Laufstreifen eine Vielzahl von durch Profilrillen voneinander getrennten Profilblöcken umfasst, die jeweils eine für den Fahrbahnkontakt vorgesehene Kontaktoberfläche aufweisen.

Hierbei hat sich erfreulicherweise gezeigt, dass die Lehre der vorstehenden Erfindung besonders gut dazu geeignet ist, entsprechende profilierte Laufstreifen mit einer gerichteten Steifigkeit zu versehen. Da die Profilblöcke des Laufstreifenprofils für den Fahrbahnkontakt besonders relevant sind und im Einsatz besonders hohe Kräfte erfahren, ist es nach Einschätzung der Erfinder besonders vorteilhaft, die Steifigkeitselemente in ebendiesen Profilblöcken vorzusehen und dabei vorteilhafterweise die Profilblöcke zumindest überwiegend auch gleich mit mehreren Steifigkeitselementen auszubilden. Erfindungsgemäß ist entsprechend ein erfindungsgemäßer Fahrzeugreifen, wobei die Steifigkeitselemente bezogen auf die Gesamtzahl der Steifigkeitselemente zu 80 % oder mehr, bevorzugt zu 90 % oder mehr, besonders bevorzugt zu 95 % oder mehr, ganz besonders bevorzugt zu 98 % oder mehr, insbesondere bevorzugt im Wesentlichen zu 100 %, in den Profilblöcken angeordnet sind. Bevorzugt ist zusätzlich oder alternativ ein erfindungsgemäßer Fahrzeugreifen, wobei die Profilblöcke, bezogen auf die Gesamtzahl der Profilblöcke zu 60 % oder mehr, bevorzugt zu 80 % oder mehr, besonders bevorzugt zu 90 % oder mehr, ganz besonders bevorzugt zu 95 % oder mehr, insbesondere bevorzugt im Wesentlichen zu 100 %, zumindest ein, bevorzugt zumindest zwei, besonders bevorzugt zumindest drei Steifigkeitselemente umfassen.

Bei Einsatz von Profilblöcken können besonders leicht geeignete Dimensionen für die Steifigkeitselemente angegeben werden, wobei die entsprechenden Größenrelationen grundsätzlich auch für den Einsatz im Inneren des Fahrzeugreifens für solche Steifigkeitselemente geeignet sind, die sich nicht zumindest bis in die Profilblöcke hinein erstrecken. Bevorzugt ist nämlich ein erfindungsgemäßer Fahrzeugreifen, wobei die Ausdehnung der Steifigkeitselemente in den Profilblöcken in radialer Richtung im Bereich von 0,2*h bis 1,0*h, bevorzugt im Bereich von 0,4*h bis 0,9*h, besonders bevorzugt im Bereich von 0,6*h bis 0,8*h, liegt, wobei h die mittlere Höhe der Profilblöcken relativ zum Grund der umgebenden Profilrillen ist. Bevorzugt ist zusätzlich oder alternativ nämlich auch ein erfindungsgemäßer Fahrzeugreifen, wobei die Ausdehnung der Steifigkeitselemente in den Profilblöcken quer zur Umfangsrichtung im Bereich von 0,5*b1 bis 1,0*b1, bevorzugt im Bereich von 0,7*b1 bis 1,0*b1, besonders bevorzugt im Bereich von 0,9*b1 bis 1,0*b1, liegt, wobei b1 die mittlere Breite der Profilblöcken quer zur Umfangsrichtung ist. Bevorzugt ist zusätzlich oder alternativ zudem ein erfindungsgemäßer Fahrzeugreifen, wobei die Ausdehnung der Steifigkeitselemente in den Profilblöcken parallel zur Umfangsrichtung im Bereich von 0,5*b2 bis 1,0*b2, bevorzugt im Bereich von 0,7*b2 bis 1,0*b2, besonders bevorzugt im Bereich von 0,9*b2 bis 1,0*b2, liegt, wobei b2 die mittlere Breite der Profilblöcken in Umfangsrichtung ist.

Insbesondere beim Einsatz von Ausnehmungen als Steifigkeitselemente ist es nach Einschätzung der Erfinder zielführend, diese möglichst weitgehend in den Profilblöcken und beispielsweise nicht im Inneren des Laufstreifens anzuordnen, da diese hierbei auch vorteilhafte Eigenschaften auf andere Fahreigenschaften haben können, bspw. für die Abfuhr von Wasser aus dem Profil oder die Reibung auf Schnee. Besonders bevorzugt ist folglich ein erfindungsgemäßer Fahrzeugreifen, wobei die Ausnehmungen bezogen auf die Gesamtzahl der Ausnehmungen zu 96 % oder mehr, bevorzugt zu 97 % oder mehr, besonders bevorzugt zu 98 % oder mehr, ganz besonders bevorzugt zu 99 % oder mehr, insbesondere bevorzugt im Wesentlichen zu 100 %, in den Profilblöcken angeordnet sind.

Nach Einschätzung der Erfinder lassen sich vorteilhafte Effekte auf das Abriebsverhalten bereits bei Einsatz von vergleichsweise wenig geneigten Steifigkeitselementen realisieren. Gleichzeitig hat sich gezeigt, dass besonders vorteilhafte Auswirkungen auf das Abriebsverhalten dann erreicht werden können, wenn möglichst viele der Strukturelemente als Steifigkeitselemente ausgebildet sind, wobei in besonders bevorzugten Ausführungsformen im Wesentlichen keine herkömmlichen, d.h. nicht geneigten Strukturelemente wie rillenförmige Ausnehmungen vorgesehen werden. Bevorzugt ist entsprechend ein erfindungsgemäßer Fahrzeugreifen, wobei bezogen auf die Gesamtzahl der Strukturelemente 30 % oder mehr, bevorzugt 50 % oder mehr, besonders bevorzugt 70 % oder mehr, ganz besonders bevorzugt 90 % oder mehr, insbesondere bevorzugt im Wesentlichen 100 %, der Strukturelemente als Steifigkeitselemente ausgebildet sind.

Nach Einschätzung der Erfinder werden besonders vorteilhafte laufrichtungsgebundene Fahrzeugreifen erhalten, wenn die Steifigkeitselemente überwiegend zumindest auch in Umfangsrichtung geneigt sind. Analog ist es nach Einschätzung der Erfinder günstig, wenn die Steifigkeitselemente zumindest auch in Querrichtung geneigt sind. Erfindungsgemäß ist ein erfindungsgemäßer Fahrzeugreifen, wobei bezogen auf die Gesamtzahl der Steifigkeitselemente 50 % oder mehr, bevorzugt 70 % oder mehr, besonders bevorzugt 90 % oder mehr, ganz besonders bevorzugt 95 % oder mehr, insbesondere im Wesentlichen 100 %, der Steifigkeitselemente in Umfangsrichtung geneigte Steifigkeitselemente sind. Bevorzugt ist entsprechend auch ein erfindungsgemäßer Fahrzeugreifen, wobei bezogen auf die Gesamtzahl der Steifigkeitselemente 50 % oder mehr, bevorzugt 70 % oder mehr, besonders bevorzugt 90 % oder mehr, ganz besonders bevorzugt 95 % oder mehr, insbesondere im Wesentlichen 100 %, der Steifigkeitselemente in Querrichtung geneigte Steifigkeitselemente sind.

Grundsätzlich sind, insbesondere zur Umsetzung von laufrichtungsgebundenen oder fahrzeugseitengebundenen Fahrzeugreifen, Ausgestaltungen denkbar, in denen die Steifigkeitselemente lediglich in Umfangsrichtung oder lediglich in Querrichtung geneigt sind, wobei die vorstehend beschriebenen Anteile entsprechend gelten. Nach Einschätzung der Erfinder ergibt sich jedoch eine besonders vorteilhafte Ausgestaltung, bei der die Vorteile der beiden Neigungsrichtungen kombiniert werden können, wenn die Strukturelemente zu großen Teilen in beide Richtungen, d.h. sowohl in Bezug auf die Umfangsrichtung als auch in Bezug auf die axiale Richtung, geneigt sind. Bevorzugt ist folglich ein erfindungsgemäßer Fahrzeugreifen, wobei bezogen auf die Gesamtzahl der Steifigkeitselemente 50 % oder mehr, bevorzugt 70 % oder mehr, besonders bevorzugt 90 % oder mehr, ganz besonders bevorzugt 95 % oder mehr, insbesondere im Wesentlichen 100 %, der Steifigkeitselemente in Umfangsrichtung geneigte und in Querrichtung geneigte Steifigkeitselemente sind.

Wie vorstehend erläutert, hat sich in Bezug auf die in Umfangsrichtung geneigten Steifigkeitselemente ergeben, dass diese weit überwiegend in die gleiche Richtung weisen sollten, um den gewünschten Effekt zu erzielen, wobei hinsichtlich der Ausrichtung zumindest das vorstehend definierte 6:4-Verhältnis eingestellt werden sollte (d.h. 60 % weisen in eine Richtung und 40 % in die andere Richtung). Besonders vorteilhafte Ausgestaltungen ergeben sich nach Einschätzung der Erfinder aber gerade dann, wenn die in Umfangsrichtung geneigten Steifigkeitselemente möglichst weitgehend in die gleiche Richtung weisen. Bevorzugt ist somit ein erfindungsgemäßer Fahrzeugreifen, wobei 70 % oder mehr, bevorzugt 80 % oder mehr, besonders bevorzugt 90 % oder mehr, ganz besonders bevorzugt 95 % oder mehr, insbesondere bevorzugt im Wesentlichen 100 %, der in Umfangsrichtung geneigten Steifigkeitselemente einen mittleren Tangentenwinkel <α(r)> aufweisen, der in die gleiche Richtung weist.

Wie vorstehend erläutert, kann es insbesondere bei relativ starken Neigungen in Umfangsrichtung im Seitenbereich des Laufstreifens zu einer nur geringfügigen Verbesserung beziehungsweise in einigen Teilen sogar zu einer negativen Beeinflussung des Abriebverhaltens kommen. Um dies zu umgehen und insbesondere im Mittelteil des Fahrzeugreifens die Vorteile größerer Neigungen in Umfangsrichtung voll ausnutzen zu können, schlagen die Erfinder vor, die Neigungswinkel quer zur Umfangsrichtung zu variieren und dadurch einen ungleichmäßigen Verlauf der Tangentenwinkel vorzusehen. Ganz besonders bevorzugt ist hierbei die Ausgestaltung, bei der im Randbereich kleinere Neigungen und im Zentralbereich ausgeprägte Neigungen, d.h. kleinere mittlere Tangentenwinkel, eingestellt werden. Erfindungsgemäß ist vor diesem Hintergrund ein erfindungsgemäßer Fahrzeugreifen, wobei der mittlere Tangentenwinkel <α(r)> zwischen separaten Steifigkeitselementen quer zur Umfangsrichtung variiert, wobei der mittlere Tangentenwinkel <α(r)> im Zentralbereich des Laufstreifens ein Minimum, aufweist, wobei der Zentralbereich die mittleren 60 % des Laufstreifens quer zur Umfangsrichtung umfasst.

Zusätzlich oder alternativ zu den vorstehenden Ausführungen ist es zudem möglich, zumindest kleine Mengen an Steifigkeitselementen vorzusehen, die entgegen der Hauptrichtung der sonstigen in Umfangsrichtung geneigten Steifigkeitselemente ausgerichtet sind, wobei es besonders bevorzugt ist, diese in den Seitenbereichen des Fahrzeugreifens anzuordnen, wobei wiederum eine möglichst symmetrische Anordnung bevorzugt ist. Bevorzugt ist insoweit ein erfindungsgemäßer Fahrzeugreifen, wobei die mittleren Tangentenwinkel <α(r)> der Steifigkeitselemente in den zwei Randbereichen des Laufstreifens zumindest teilweise, bevorzugt überwiegend, besonders bevorzugt im Wesentlichen vollständig, in die entgegengesetzte Richtung weisen wie die mittleren Tangentenwinkel <α(r)> der Steifigkeitselemente im Zentralbereich, wobei der Zentralbereich die mittleren 60 % des Laufstreifens quer zur Umfangsrichtung umfasst und wobei die zwei Randbereiche jeweils die äußeren 20 % des Laufstreifens quer zur Umfangsrichtung umfassen.

Wie vorstehend erläutert, resultiert eine ausgeprägte Neigung der Steifigkeitselemente in Umfangsrichtung in Kombination mit einem hohen Anteil dieser in Umfangsrichtung geneigter Steifigkeitselemente darin, dass in Abhängigkeit von der Laufrichtung des Fahrzeugreifens bei einer Laufrichtung ein deutlich verbessertes Abriebsverhalten beobachtet wird. Entsprechend ist es besonders bevorzugt, solche Fahrzeugreifen explizit als laufrichtungsgebundene Fahrzeugreifen auszulegen. Bevorzugt ist genauer gesagt ein erfindungsgemäßer Fahrzeugreifen, wobei der Fahrzeugreifen ein laufrichtungsgebundener Fahrzeugreifen ist, wobei 70 % oder mehr, bevorzugt 80 % oder mehr, besonders bevorzugt 90 % oder mehr, ganz besonders bevorzugt 95 % oder mehr, insbesondere bevorzugt im Wesentlichen 100 %, der in Umfangsrichtung geneigten Steifigkeitselemente einen mittleren Tangentenwinkel <α(r)> aufweisen, der entgegen der vorgesehenen Laufrichtung weist. In Übereinstimmung mit dem fachmännischen Verständnis ist dabei die vorgesehene Laufrichtung die Umlaufrichtung des Fahrzeugreifens, die im Bereich des Fahrbahnkontaktes entgegen der Fahrtrichtung gerichtet ist.

Bevorzugt ist zusätzlich oder alternativ zu den vorstehenden Ausführungen ein erfindungsgemäßer Fahrzeugreifen, wobei bezogen auf die Gesamtzahl der in Umfangsrichtung geneigten Steifigkeitselemente, 50 % oder mehr, bevorzugt 70 % oder mehr, besonders bevorzugt 90 % oder mehr, ganz besonders bevorzugt im Wesentlichen 100 %, der Steifigkeitselemente im Zentralbereich des Laufstreifens angeordnet sind, wobei der Zentralbereich die mittleren 60 % des Laufstreifens quer zur Umfangsrichtung umfasst.

Hinsichtlich der Vorzugsrichtung der Querneigung sind nach Einschätzung der Erfinder zwei Optionen besonders bevorzugt. Durch die Einstellung einer Vorzugsneigung in eine Richtung, d.h. durch die Ausführung der Steifigkeitselemente mit einem mittleren Tangentenwinkel, welcher weitgehend in die gleiche Richtung weist, lassen sich Fahrzeugreifen erhalten, welche für den Einsatz auf der linken beziehungsweise rechten Fahrzeugseite explizit bevorzugt sind, da die Fahrzeugreifen dadurch auf das in Kurvenfahrten zu erwartende Belastungsprofil zielgenau eingestellt werden können. Beim rechten Reifen ist beispielsweise der Abrieb aus Linkskurven deutlich größer als der aus Rechtskurven, sodass eine Ausrichtung des Winkels in die bei den jeweiligen Kurvenfahrten zu erwartende Krafteinwirkung ein links/rechts-spezifisches Einstellen der Fahrzeugreifen ermöglicht. Bevorzugt ist hierfür ein erfindungsgemäßer Fahrzeugreifen, wobei 70 % oder mehr, bevorzugt 80 % oder mehr, besonders bevorzugt 90 % oder mehr, ganz besonders bevorzugt 95 % oder mehr, insbesondere bevorzugt im Wesentlichen 100 %, der in Querrichtung geneigten Steifigkeitselemente einen mittleren Tangentenwinkel <β(r)> aufweisen, der in die gleiche Richtung weist.

Alternativ lassen sich günstige Abriebseigenschaften in nicht fahrzeugseitengebundenen Fahrzeugreifen nach Einschätzung der Erfinder besonders gut dann realisieren, wenn die Querneigung der Steifigkeitselemente in den beiden Randbereichen des Fahrzeugreifens invertiert wird, wobei besonders bevorzugt im Wesentlichen eine Spiegelung der Steifigkeitselemente an der zentralen Ebene des Fahrzeugreifens orthogonal zur axialen Richtung bevorzugt ist. Bevorzugt ist zunächst ein erfindungsgemäßer Fahrzeugreifen, wobei bezogen auf die Gesamtzahl der in Querrichtung geneigten Steifigkeitselemente, 50 % oder mehr, bevorzugt 70 % oder mehr, besonders bevorzugt 90 % oder mehr, ganz besonders bevorzugt im Wesentlichen 100 %, der Steifigkeitselemente in den zwei Randbereichen des Laufstreifens angeordnet sind, wobei die zwei Randbereiche jeweils die äußeren 20 % des Laufstreifens quer zur Umfangsrichtung umfassen. Besonders bevorzugt ist insoweit ein erfindungsgemäßer Fahrzeugreifen, wobei die mittleren Tangentenwinkel <β(r)> der in Querrichtung geneigten Steifigkeitselemente in einem der zwei Randbereiche des Laufstreifens zumindest teilweise, bevorzugt überwiegend, besonders bevorzugt im Wesentlichen vollständig, in die entgegengesetzte Richtung weisen wie die mittleren Tangentenwinkel <β(r)> der Steifigkeitselemente in dem gegenüberliegenden Randbereich, wobei die zwei Randbereiche jeweils die äußeren 20 % des Laufstreifens quer zur Umfangsrichtung umfassen.

Nachfolgend werden bevorzugte Ausführungsformen der Erfindung unter Bezugnahme auf die beiliegenden Figuren näher erläutert und beschrieben, wobei in den Figuren zur Verdeutlichung jeweils je nach Bedarf die radiale Richtung R, die Umfangsrichtung U oder die A. Dabei zeigen:
- Fig. 1: eine stark vereinfachte schematische Darstellung eines erfindungsgemäßen Fahrzeugreifens;
- Fig. 2: eine schematische Darstellungen von Profilblöcken mit unterschiedlichen Strukturelementen oder Steifigkeitselementen;
- Fig. 3: eine schematische Visualisierung von zentralen Schwerpunktlinien in beispielhaften Strukturelementen;
- Fig. 4: eine schematische Visualisierung der auftretenden Schnittwinkel der zentralen Schwerpunktlinie mit der Umfangsrichtung;
- Fig. 5: eine schematische Visualisierung der auftretenden Schnittwinkel der zentralen Schwerpunktlinie bei gekrümmten Schwerpunktlinien;
- Fig. 6: eine schematische Querschnittsdarstellung quer zur Umfangsrichtung durch einen beispielhaften Laufstreifen mit verschiedenen in Querrichtung geneigten Steifigkeitselementen; und
- Fig. 7: eine schematische Visualisierung des Einflusses in Umgangsrichtung geneigter Steifigkeitselemente auf die beim Durchlaufen der Aufstandsfläche wirkenden Kräfte.

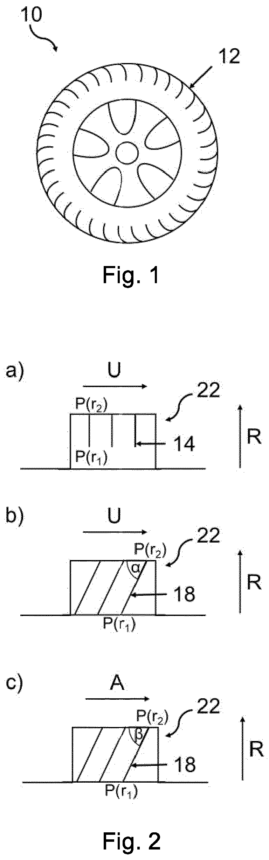

Figur 1 zeigt eine sehr schematische Darstellung eines erfindungsgemäßen Fahrzeugreifens 10 mit einem für den Fahrbahnkontakt vorgesehenen profilierten Laufstreifen 12, wobei der Fahrzeugreifen 10 als Fahrzeugluftreifen, insbesondere PKW-Reifen ausgeführt ist.

Figur 2a) zeigt eine schematische Darstellung eines Profilblocks 22 in einer parallel zur Umfangsrichtung U verlaufenden Querschnittsansicht, wie er aus dem Stand der Technik bekannt ist. In dem Profilblock 22 erstrecken sich drei Strukturelemente 14, welche als lamellenartige Ausnehmungen ausgeführt sind, und sich von einem in radialer Richtung R innen liegenden Punkt P(r₁) mit dem Radius r₁ zu einem radial weiter außen liegenden Punkt P(r₂) mit dem Radius r₂ erstrecken. In der schematischen Darstellung der Figur 2A) sind die Strukturelemente 14 weder in Umfangsrichtung U noch in axiale Richtung geneigt und weisen entsprechend mit beiden Richtungen über die gesamte Länge einen Tangentenwinkel von 90° auf.

Figur 2b) visualisiert im Unterschied zur Figur 2a) eine Neigung der Strukturelemente 14 in Umfangsrichtung U. In dem gezeigten Profilblock 22 sind nunmehr die drei Strukturelemente 14 als Steifigkeitselemente 18 ausgeführt, die mit der Umfangsrichtung U an jedem Punkt des Radius r einen Winkel α einschließen, der von 90° verschieden ist. Da die Steifigkeitselemente 18 als gerade Einschnitte ausgeführt sind und entsprechend eine zentrale Schwerpunktslinie 16 aufweisen, deren Steigung sich über die gesamte Länge nicht verändert, entspricht der mittlere Tangentenwinkel <α(r)> in diesem Fall dem Schnittwinkel α. Figur 2c) visualisiert eine entsprechende Querneigung der Steifigkeitselemente 18 im Profilblock 22 und den zugehörigen Winkel β.

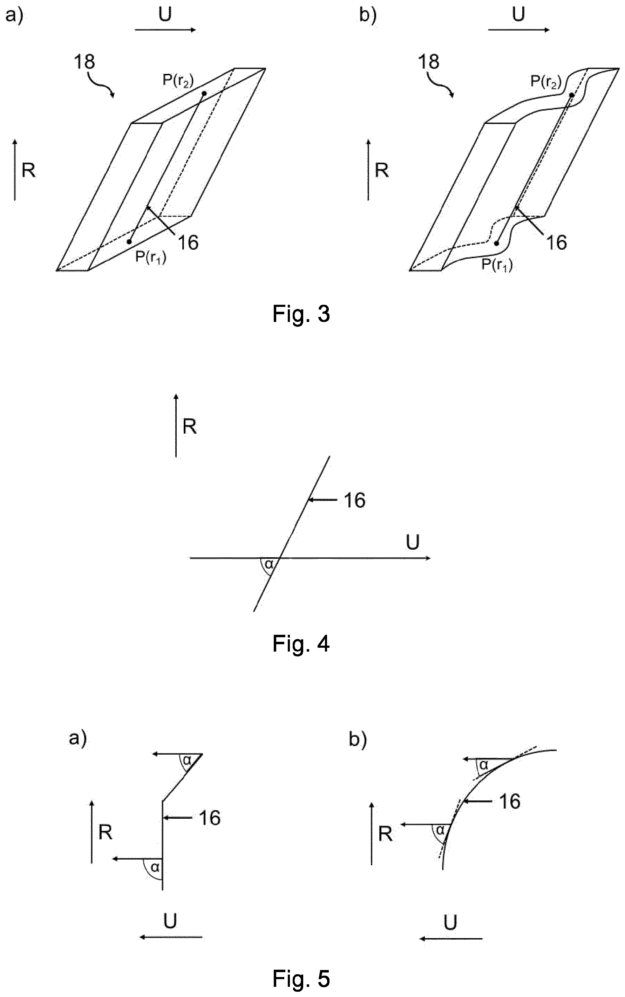

Figur 3 dient der Erläuterung, wie die zwischen den Punkten P(r₁) und P(r₂) in radialer Richtung von innen nach außen verlaufende zentrale Schwerpunktlinie 16 in einem Steifigkeitselement 18 beziehungsweise einem Strukturelement 14 orientiert ist und veranschaulicht der Identifikation in schematischen beispielhaften geneigten Steifigkeitselementen 18.

Figur 4 verdeutlicht in einer schematischen Darstellung unter Eintragung der Umfangsrichtung U und der radialen Richtung R, welcher Schnittwinkel im Rahmen der vorliegenden Erfindung an einem Punkt P(r) als der radial nach innen gerichtete Tangentenwinkel abzulesen ist.

Figur 5a) visualisiert am Beispiel eines Strukturelements 14, welches als ein aus dem Stand der Technik bekannter "shovel sipe" ausgeführt ist, wie die Winkel relativ zur Umfangsrichtung U an jedem Punkt entlang der radialen Richtung abgelesen werden können und visualisiert deutlich, dass in diesem Fall der Unterschied zwischen dem maximalen und dem minimalen Tangentenwinkel deutlich über 15°, nämlich bei etwa 45° liegt.

Figur 5b) verdeutlicht nunmehr das dem Fachmann geläufige Konzept, für eine gekrümmte Funktion an jedem Punkt P(r) den jeweiligen Winkel über den Tangentenwinkel zu bestimmen, wenn die zentrale Schwerpunktlinie 16, wobei auch in diesem Fall ein Strukturelement 14 gezeigt wird, bei dem es sich nicht um ein Steifigkeitselement 18 handelt, da die Differenz zwischen dem Maximum und dem Minimum des Tangentenwinkels α wiederum größer als 15° ist, da dieser nämlich in der Differenz zwischen den äußersten Punkten bei im Wesentlichen 90° liegt.

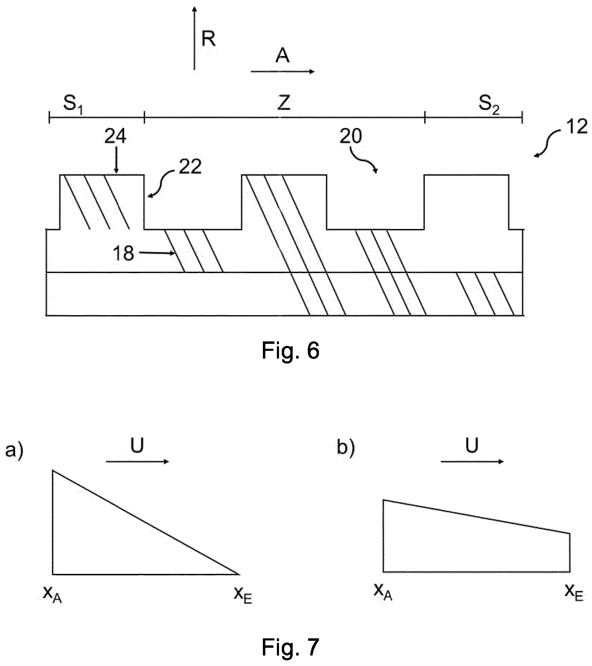

Figur 6 zeigt eine schematische Querschnittsdarstellung quer zur Umfangsrichtung durch den Laufstreifen 12 eines erfindungsgemäßen Fahrzeugreifens 10, wobei die Profilblöcke 22 mit der für den

Fahrbahnkontakt vorgesehenen Kontaktoberfläche 24 und den dazwischen liegenden Profilrillen 20 schematisch eingetragen sind. Zur besseren Verdeutlichung ist in Figur 6 zudem der Zentralbereich Z eingetragen, welcher die mittleren 60 % des Laufstreifens 12 quer zur Umfangsrichtung ausmacht und beidseitig von den zwei Randbereichen S₁ und S₂ flankiert wird. Dabei zeigt die Figur 6 am Beispiel von in Querrichtung geneigten Steifigkeitselementen 18 mögliche Anordnungen dieser Steifigkeitselemente in einem Laufstreifen 12 mit "Cap/Base"-Konstruktion. Die schematisch eingezeichneten Steifigkeitselemente 18 können sich beispielsweise lediglich durch die Profilblöcke 22 erstrecken und dabei beispielsweise bis zur Oberfläche des Laufstreifens 12 reichen. Möglich, wenn auch weniger bevorzugt, ist eine Anordnung im Bereich der Profilrille 20, wobei auch hier denkbar ist, dass sich die Steifigkeitselemente 18 von der Oberfläche des Laufstreifens 12 bis in die "Base" hinein erstrecken, wobei in Figur 6 zudem eine Ausführungsform gezeigt ist, bei der die in Querrichtung geneigten Steifigkeitselemente 18 nicht bis zur Oberfläche des Laufstreifens 12 reichen, sondern ausschließlich in der "Base" angeordnet sind.

Figur 7 visualisiert abschließend beispielhaft, welchen Einfluss die Steifigkeitselemente 18 nach Einschätzung der Erfinder auf die beim Durchlaufen der Aufstandsfläche erfahrene Kraft ausüben. Figur 7a) zeigt eine schematische Repräsentation eines Kraftverlaufs, der sich beim Antreiben zwischen dem Einlauf X_{E} und dem Auslauf X_{A} des Aufstandsbereichs ergibt, wobei insbesondere die am Auslauf X_{A} wirkende Kraft eine Reibenergie bewirkt. Figur 7b) zeigt ausgehend davon einen schematischen Kraftverlauf beim Antreiben in einem erfindungsgemäßen Fahrzeugreifen 10, welcher in Umfangsrichtung geneigte Steifigkeitselemente 18 umfasst, und dabei als laufrichtungsgebundener Fahrzeugreifen 10 ausgeführt ist, bei dem im Wesentlichen sämtliche in Umfangsrichtung geneigten Steifigkeitselemente 18 in die gleiche Richtung weisen, nämlich entgegen der Laufrichtung. Es kommt zu einer Abflachung des Kraftverlaufs und in vorteilhafter Weise zu einer reduzierten Kraft am Auslauf X_{A}.

### Bezugszeichenliste

- 10: Fahrzeugreifen
- 12: Laufstreifen
- 14: Strukturelement
- 16: Zentrale Schwerpunktlinie
- 18: Steifigkeitselement
- 20: Profilrillen
- 22: Profilblöcke
- 24: Kontaktoberfläche

## Patentansprüche

1. Fahrzeugreifen (10) mit einem für den Fahrbahnkontakt
vorgesehenen Laufstreifen (12), wobei der Laufstreifen (12) eine Vielzahl von durch Profilrillen (20) voneinander getrennten Profilblöcken (22) umfasst, die jeweils eine für den Fahrbahnkontakt vorgesehene Kontaktoberfläche (24) aufweisen,
wobei der Laufstreifen (12) eine Vielzahl von flächigen Strukturelementen (14) umfasst, wobei jedes Strukturelement (14) in Längsrichtung jeweils eine zentrale Schwerpunktlinie (16) aufweist, die sich bezogen auf die radiale Richtung jeweils von einem inneren Punkt P(r₁) mit dem Radius r₁ zu einem äußeren Punkt P(r₂) mit dem Radius r₂ durch den Laufstreifen (12) erstrecken, und die Punkte P(r) als Funktion des Radius r umfasst,
wobei die Strukturelemente (14) unabhängig voneinander ausgewählt sind aus der Gruppe bestehend aus Ausnehmungen im Laufstreifen (12), und Materialbereichen mit einer im Vergleich mit dem umliegenden Laufstreifen (12) erhöhten oder verringerten Steifigkeit,
wobei die zentrale Schwerpunktlinie (16) jedes Strukturelements (14) an jedem Punkt P(r) mit der Umfangsrichtung jeweils einen radial nach innen gerichteten Tangentenwinkel α_{S}(r) einschließt, wobei die zentrale Schwerpunktlinie (16) jedes Strukturelements (14) an jedem Punkt P(r) mit der axialen Richtung jeweils einen radial nach innen gerichteten Tangentenwinkel β_{S}(r) einschließt,
wobei zumindest ein Teil der Strukturelemente (14) als Steifigkeitselemente (18) ausgebildet sind, für die im jeweiligen Bereich von r₁ bis r₂ gilt:
i) dass diese in Umfangsrichtung geneigte Steifigkeitselemente (18) sind, deren mittlerer Tangentenwinkel <α(r)> weniger als 89° beträgt, wobei die Differenz Δα(r) zwischen dem Maximum und dem Minimum des Tangentenwinkels α_{S}(r) kleiner ist als 15°,
und
ii) dass diese in Querrichtung geneigte Steifigkeitselemente (18) sind, deren mittlerer Tangentenwinkel <β(r)> weniger als 89° beträgt, wobei die Differenz Δβ(r) zwischen dem Maximum und dem Minimum des Tangentenwinkels β_{S}(r) kleiner ist als 15°,
wobei die Steifigkeitselemente (18) bezogen auf die Gesamtzahl der Steifigkeitselemente (18) zu 80 % oder mehr in den Profilblöcken (22) angeordnet sind, wobei bezogen auf die Gesamtzahl der Steifigkeitselemente (18) 50 % oder mehr der Steifigkeitselemente (18) in Umfangsrichtung geneigte Steifigkeitselemente (18) sind,
wobei 60 % oder mehr der in Umfangsrichtung geneigten Steifigkeitselemente (18) einen mittleren Tangentenwinkel <α(r)> aufweisen, der in die gleiche Richtung weist,
wobei der mittlere Tangentenwinkel <α(r)> der in Umfangsrichtung geneigten Steifigkeitselemente (18)
zwischen separaten Steifigkeitselementen (18) quer zur Umfangsrichtung variiert, wobei der mittlere Tangentenwinkel <α(r)> der in Umfangsrichtung geneigten Steifigkeitselemente im Zentralbereich des Laufstreifens ein Minimum aufweist, wobei der Zentralbereich die mittleren 60 % des Laufstreifens quer zur Umfangsrichtung umfasst.

2. Fahrzeugreifen (10) nach Anspruch 1, wobei die Profilblöcke (22), bezogen auf die Gesamtzahl der Profilblöcke (22) zu 60 % oder mehr zumindest ein Steifigkeitselement (18) umfassen.

3. Fahrzeugreifen (10) nach einem der Ansprüche 1 oder 2, wobei die Steifigkeitselemente (18) bezogen auf die Gesamtzahl der Steifigkeitselemente (18) zu 80 % oder mehr teilweise an der Oberfläche des Laufstreifens (12) liegen.

4. Fahrzeugreifen (10) nach einem der Ansprüche 1 oder 2, wobei die Steifigkeitselemente (18) bezogen auf die Gesamtzahl der Steifigkeitselemente (18) zu 80 % oder mehr vollständig im Inneren des Laufstreifens (12) angeordnet sind.

5. Fahrzeugreifen (10) nach einem der Ansprüche 1 bis 4, wobei die Strukturelemente (14) unabhängig voneinander ausgewählt sind aus der Gruppe bestehend aus Ausnehmungen im Laufstreifen (12).

6. Fahrzeugreifen (10) nach einem der Ansprüche 1 bis 4, wobei die Strukturelemente (14) unabhängig voneinander ausgewählt sind aus der Gruppe bestehend aus Materialbereichen mit einer im Vergleich mit dem umliegenden Laufstreifen (12) verringerten Steifigkeit.

7. Fahrzeugreifen (10) nach einem der Ansprüche 1 bis 6, wobei bezogen auf die Gesamtzahl der Steifigkeitselemente (18) 50 % oder mehr der Steifigkeitselemente (18) in Querrichtung geneigte Steifigkeitselemente (18) sind.

8. Fahrzeugreifen (10) nach einem der Ansprüche 1 bis 7, wobei der mittlere Tangentenwinkel <β(r)> der in Querrichtung geneigten Steifigkeitselemente (18) zwischen separaten Steifigkeitselementen (18) quer zur Umfangsrichtung variiert.

9. Fahrzeugreifen (10) nach einem der Ansprüche 1 bis 8, wobei die mittleren Tangentenwinkel <α(r)> der in Umfangsrichtung geneigten Steifigkeitselemente (18) in den zwei Randbereichen des Laufstreifens (12) zumindest teilweise in die entgegengesetzte Richtung weisen wie die mittleren Tangentenwinkel <α(r)> der in Umfangsrichtung geneigten Steifigkeitselemente (18) im Zentralbereich, wobei der Zentralbereich die mittleren 60 % des Laufstreifens (12) quer zur Umfangsrichtung umfasst und wobei die zwei Randbereiche jeweils die äußeren 20 % des Laufstreifens (12) quer zur Umfangsrichtung umfassen.

10. Fahrzeugreifen (10) nach einem der Ansprüche 1 bis 9, wobei der Fahrzeugreifen (10) ein laufrichtungsgebundener Fahrzeugreifen (10) ist, wobei 70 % oder mehr der in Umfangsrichtung geneigten Steifigkeitselemente (18) einen mittleren Tangentenwinkel <α(r)> aufweisen, der entgegen der vorgesehene Laufrichtung weist.

11. Fahrzeugreifen (10) nach einem der Ansprüche 1 bis 10, wobei bezogen auf die Gesamtzahl der in Querrichtung geneigten Steifigkeitselemente (18) 50 % oder mehr der Steifigkeitselemente (18) in den zwei Randbereichen des Laufstreifens (12) angeordnet sind, wobei die zwei Randbereiche jeweils die äußeren 20 % des Laufstreifens (12) quer zur Umfangsrichtung umfassen.

12. Fahrzeugreifen (10) nach einem der Ansprüche 1 bis 11, wobei die mittleren Tangentenwinkel <β(r)> der in Querrichtung geneigten Steifigkeitselemente (18) in einem der zwei Randbereiche des Laufstreifens (12) zumindest teilweise in die entgegengesetzte Richtung weisen wie die mittleren Tangentenwinkel <β(r)> der Steifigkeitselemente (18) in dem gegenüberliegenden Randbereich, wobei die zwei Randbereiche jeweils die äußeren 20 % des Laufstreifens (12) quer zur Umfangsrichtung umfassen.

13. Fahrzeugreifen (10) nach einem der Ansprüche 1 bis 12, wobei 70 % oder mehr der in Querrichtung geneigten Steifigkeitselemente (18) einen mittleren Tangentenwinkel <β(r)> aufweisen, der in die gleiche Richtung weist.

## Claims

1. Vehicle tyre (10) having a tread (12) intended for contact with the roadway, wherein the tread (12) comprises a multiplicity of profile blocks (22) which are separated from one another by profile grooves (20) and respectively have a contact surface (24) intended for contact with the roadway,
wherein the tread (12) has a multiplicity of two-dimensional structural elements (14), wherein each structural element (14) respectively has a central centre-of-gravity line (16) in the longitudinal direction, said lines each extending through the tread (12), with respect to the radial direction, from an inner point P(r₁) with the radius r₁ to an outer point P(r₂) with the radius r₂, and comprises the points P(r) as a function of the radius r,
wherein the structural elements (14) are selected independently of one another from the group consisting of recesses in the tread (12) and material regions with a stiffness that is increased or reduced compared with the surrounding tread (12), wherein the central centre-of-gravity line (16) of each structural element (14) at each point P(r) respectively encloses with the circumferential direction a radially inwardly directed tangent angle αₛ(r),
wherein the central centre-of-gravity line (16) of each structural element (14) at each point P(r) respectively encloses with the axial direction a radially inwardly directed tangent angle βₛ(r),
wherein at least some of the structural elements (14) are in the form of stiffness elements (18) for which the following applies in the respective region of r₁ to r₂:
i) they are stiffness elements (18) which are inclined in the circumferential direction and the mean tangent angle <α(r)> of which is less than 89°, wherein the difference Δα(r) between the maximum and the minimum of the tangent angle αₛ(r) is less than 15°,
and
ii) they are stiffness elements (18) which are inclined in the transverse direction and the mean tangent angle <β(r)> of which is less than 89°, wherein the difference Δβ(r) between the maximum and the minimum of the tangent angle βₛ(r) is less than 15°,
wherein, with respect to the total number of the stiffness elements (18), 80% or more of the stiffness elements (18) are arranged in the profile blocks (22), wherein, with respect to the total number of the stiffness elements (18), 50% or more of the stiffness elements (18) are stiffness elements (18) that are inclined in the circumferential direction,
wherein 60% or more of the stiffness elements (18) that are inclined in the circumferential direction have a mean tangent angle <α(r)> which faces in the same direction,
wherein the mean tangent angle <α(r)> of the stiffness elements (18) that are inclined in the circumferential direction varies transversely to the circumferential direction between separate stiffness elements (18), wherein the mean tangent angle <α(r)> of the stiffness elements that are inclined in the circumferential direction has a minimum in the central region of the tread, wherein the central region comprises the central 60% of the tread transversely to the circumferential direction.

2. Vehicle tyre (10) according to Claim 1, wherein, with respect to the total number of the profile blocks (22), 60% or more of the profile blocks (22) comprise at least one stiffness element (18).

3. Vehicle tyre (10) according to either of Claims 1 and 2, wherein, with respect to the total number of the stiffness elements (18), 80% or more of the stiffness elements (18) lie partially on the surface of the tread (12).

4. Vehicle tyre (10) according to either of Claims 1 and 2, wherein, with respect to the total number of the stiffness elements (18), 80% or more of the stiffness elements (18) are arranged completely within the tread (12).

5. Vehicle tyre (10) according to one of Claims 1 to 4, wherein the structural elements (14) are selected independently of one another from the group consisting of recesses in the tread (12).

6. Vehicle tyre (10) according to one of Claims 1 to 4, wherein the structural elements (14) are selected independently of one another from the group consisting of material regions with a stiffness that is reduced compared with the surrounding tread (12).

7. Vehicle tyre (10) according to one of Claims 1 to 6, wherein, with respect to the total number of the stiffness elements (18), 50% or more of the stiffness elements (18) are stiffness elements (18) that are inclined in the transverse direction.

8. Vehicle tyre (10) according to one of Claims 1 to 7, wherein the mean tangent angle <β(r)> of the stiffness elements (18) that are inclined in the transverse direction varies transversely to the circumferential direction between separate stiffness elements (18).

9. Vehicle tyre (10) according to one of Claims 1 to 8, wherein the mean tangent angles <α(r)> of the stiffness elements (18) that are inclined in the circumferential direction situated in the two peripheral regions of the tread (12) face at least partially in the opposite direction to the mean tangent angles <α(r)> of the stiffness elements (18) that are inclined in the circumferential direction situated in the central region, wherein the central region comprises the central 60% of the tread (12) transversely to the circumferential direction and wherein the two peripheral regions respectively comprise the outer 20% of the tread (12) transversely to the circumferential direction.

10. Vehicle tyre (10) according to one of Claims 1 to 9, wherein the vehicle tyre (10) is a directional vehicle tyre (10), wherein 70% or more of the stiffness elements (18) that are inclined in the circumferential direction have a mean tangent angle <α(r)> which faces counter to the intended running direction.

11. Vehicle tyre (10) according to one of Claims 1 to 10, wherein, with respect to the total number of the stiffness elements (18) that are inclined in the transverse direction, 50% or more of the stiffness elements (18) are arranged in the two peripheral regions of the tread (12), wherein the two peripheral regions respectively comprise the outer 20% of the tread (12) transversely to the circumferential direction.

12. Vehicle tyre (10) according to one of Claims 1 to 11, wherein the mean tangent angles <β(r)> of the stiffness elements (18) that are inclined in the transverse direction that are situated in the two peripheral regions of the tread (12) face at least partially in the opposite direction to the mean tangent angles <β(r)> of the stiffness elements (18) in the opposite peripheral region, wherein the two peripheral regions respectively comprise the outer 20% of the tread (12) transversely to the circumferential direction.

13. Vehicle tyre (10) according to one of Claims 1 to 12, wherein 70% or more of the stiffness elements (18) that are inclined in the transverse direction have a mean tangent angle <β(r)> which faces in the same direction.

## Revendications

1. Pneu (10) de véhicule avec une bande de roulement (12) prévue pour le contact avec la voie de circulation, la bande de roulement (12) comprenant une pluralité de blocs profilés (22) séparés les uns des autres par des rainures profilées (20), qui comportent chacun une surface de contact (24) prévue pour le contact avec la voie de circulation,
la bande de roulement (12) comprenant une pluralité d'éléments structurels (14) plats, chaque élément structurel (14) comportant dans le sens longitudinal chacun une ligne centrale (16) de centre de gravité, qui s'étend par rapport à la direction radiale à travers la bande de roulement (12) respectivement depuis un point intérieur P(r₁) avec le rayon r₁ vers un point extérieur P(r₂) avec le rayon r₂ et comprend les points P(r) en tant que fonction du rayon r,
les éléments structurels (14) étant choisis indépendamment les uns des autres dans le groupe constitué d'évidements dans la bande de roulement (12) et de zones de matériau avec une rigidité augmentée ou réduite en comparaison avec la bande de roulement (12) située autour,
la ligne centrale (16) de centre de gravité de chaque élément structurel (14) formant sur chaque point P(r) avec la direction périphérique respectivement un angle tangent αₛ(r) dirigé radialement vers l'intérieur, la ligne centrale de centre de gravité (16) de chaque élément structurel (14) formant sur chaque point P(r) avec la direction axiale respectivement un angle tangent βₛ(r) dirigé radialement vers l'intérieur,
au moins une partie des éléments structurels (14) étant réalisés comme des éléments de rigidité (18), pour lesquels s'applique dans la plage respective de r₁ à r₂ :
i) que ceux-ci sont des éléments de rigidité (18) inclinés dans la direction périphérique, dont l'angle tangent moyen <α(r)> est inférieur à 89°, la différence Δα(r) entre le maximum et le minimum de l'angle tangent αₛ(r) étant inférieure à 15°,
et
ii) que ceux-ci sont des éléments de rigidité (18) inclinés dans la direction transversale, dont l'angle tangent moyen <β(r)> est inférieur à 89°, la différence Δβ(r) entre le maximum et le minimum de l'angle tangent βₛ(r) étant inférieure à 15°,
les éléments de rigidité (18) étant disposés à 80 % ou plus dans les blocs profilés (22) par rapport au nombre total des éléments de rigidité (18), 50 % ou plus des éléments de rigidité (18) étant des éléments de rigidité (18) inclinés dans la direction périphérique par rapport au nombre total des éléments de rigidité (18), 60 % ou plus des éléments de rigidité (18) inclinés dans la direction périphérique comportant un angle tangent moyen <α(r)>, qui pointe dans la même direction, l'angle tangent moyen <α(r)> des éléments de rigidité (18) inclinés dans la direction périphérique entre des éléments de rigidité (18) séparés variant transversalement par rapport à la direction périphérique, l'angle tangent moyen <α(r)> des éléments de rigidité inclinés dans la direction périphérique présentant dans la zone centrale de la bande de roulement un minimum, la zone centrale comprenant les 60 % centraux de la bande de roulement transversalement à la direction périphérique.

2. Pneu (10) de véhicule selon la revendication 1, les blocs profilés (22) comprenant à 60 % ou plus au moins un élément de rigidité (18) par rapport au nombre total des blocs profilés (22).

3. Pneu (10) de véhicule selon l'une des revendications 1 ou 2, les éléments de rigidité (18) étant situés à 80 % ou plus en partie sur la surface de la bande de roulement (12) par rapport au nombre total des éléments de rigidité (18).

4. Pneu (10) de véhicule selon l'une des revendications 1 ou 2, les éléments de rigidité (18) étant disposés à 80 % ou plus en totalité à l'intérieur de la bande de roulement (12) par rapport au nombre total des éléments de rigidité (18).

5. Pneu (10) de véhicule selon l'une des revendications 1 à 4, les éléments structurels (14) étant choisis indépendamment les uns des autres dans le groupe constitué des évidements dans la bande de roulement (12).

6. Pneu (10) de véhicule selon l'une des revendications 1 à 4, les éléments structurels (14) étant choisis indépendamment les uns des autres dans le groupe constitué de zones de matériau avec une rigidité réduite en comparaison avec la bande de roulement (12) située en périphérie.

7. Pneu (10) de véhicule selon l'une des revendications 1 à 6, 50 % ou plus des éléments de rigidité (18) étant des éléments de rigidité (18) inclinés dans la direction transversale par rapport au nombre total des éléments de rigidité (18).

8. Pneu (10) de véhicule selon l'une des revendications 1 à 7, l'angle tangent central <β(r)> des éléments de rigidité (18) inclinés dans la direction transversale entre des éléments de rigidité (18) séparés variant transversalement à la direction périphérique.

9. Pneu (10) de véhicule selon l'une des revendications 1 à 8, les angles tangents centraux <α(r)> des éléments de rigidité (18) inclinés dans la direction périphérique pointant dans les deux zones de bord de la bande de roulement (12) au moins en partie dans la direction opposée comme les angles tangents centraux <α(r)> des éléments de rigidité (18) inclinés dans la direction périphérique dans la zone centrale, la zone centrale comprenant les 60 % centraux de la bande de roulement (12) transversalement à la direction périphérique et les deux zones de bord comprenant chacune les 20 % extérieurs de la bande de roulement (12) transversalement à la direction périphérique.

10. Pneu (10) de véhicule selon l'une des revendications 1 à 9, le pneu (10) de véhicule étant un pneu (10) de véhicule lié à la direction de roulement, 70 % ou plus des éléments de rigidité (18) inclinés dans la direction périphérique comportant un angle tangent moyen <α(r)>, qui pointe à l'opposé de la direction de roulement prévue.

11. Pneu (10) de véhicule selon l'une des revendications 1 à 10, 50 % ou plus des éléments de rigidité (18) étant disposés dans les deux zones de bord de la bande de roulement (12) par rapport au nombre total des éléments de rigidité (18) inclinés dans la direction transversale, les deux zones de bord comprenant chacune les 20 % extérieurs de la bande de roulement (12) transversalement à la direction périphérique.

12. Pneu (10) de véhicule selon l'une des revendications 1 à 11, les angles tangents centraux <β (r)> des éléments de rigidité (18) inclinés dans la direction transversale pointant dans une des deux zones de bord de la bande de roulement (12) au moins en partie dans la direction opposée comme les angles tangents centraux <β(r)> des éléments de rigidité (18) dans la zone de bord opposée, les deux zones de bord comprenant chacune les 20 % extérieurs de la bande de roulement (12) transversalement à la direction périphérique.

13. Pneu (10) de véhicule selon l'une des revendications 1 à 12, 70 % ou plus des éléments de rigidité (18) inclinés dans la direction transversale comportant un angle tangent moyen <β(r)>, qui pointe dans la même direction.
